(19) Europäisches Patentamt
European Patent Office
Office européen des brevets

(11) **EP 2 799 858 A1**

(12) **EUROPÄISCHE PATENTANMELDUNG**

(43) Veröffentlichungstag:
05.11.2014 Patentblatt 2014/45

(51) Int Cl.:
*G01N 27/407* (2006.01)

(21) Anmeldenummer: 13166237.1

(22) Anmeldetag: 02.05.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **E+E Elektronik Ges.m.b.H.**
**4209 Engerwitzdorf (AT)**

(72) Erfinder:
• **Pachinger, Dietmar**
**4612 Scharten (AT)**

• **Zotl, Ernst**
**4312 Ried i.d. Riedmark (AT)**
• **Niessner, Georg**
**4223 Katsdorf (AT)**

(74) Vertreter: **Hofmann, Ernst**
**Dr. Johannes Heidenhain GmbH,**
**Patentabteilung,**
**Postfach 12 60**
**83292 Traunreut (DE)**

(54) **Amperometrischer Gassensor**

(57) Es wird ein amperometrischer Gassensor angegeben, der zur Bestimmung des Sauerstoffgehalts in Gasgemischen geeignet ist. Dieser umfasst einen Festkörperelektrolyt und zwei auf dem Festkörperelektrolyt angeordnete, dem Gasgemisch ausgesetzte Elektroden, zwischen denen über eine Spannungsquelle eine Gleichspannung anlegbar ist, sowie eine Messeinrichtung zur Messung des zwischen den Elektroden fließenden Grenzstroms als Maß für den Sauerstoffgehalt im Gasgemisch. Die als Kathode fungierende Elektrode ist ohne zwischengeschaltete Diffusionsbarriere in Kontakt mit dem Gasgemisch. Durch die Ausbildung der Kathode resultiert eine definierte Begrenzung des Zustroms von Sauerstoffmolekülen aus dem Gasgemisch zur Dreiphasengrenze zwischen dem Festkörperelektrolyten, der Kathode und dem Gasgemisch (Figur 1).

FIG. 1

EP 2 799 858 A1

**Beschreibung**

GEBIET DER TECHNIK

Die vorliegende Erfindung betrifft einen amperometrischen Gassensor, der insbesondere zur Bestimmung des Sauerstoffgehalts in Gasgemischen geeignet ist.

STAND DER TECHNIK

Aus dem Stand der Technik ist zur Bestimmung des Sauerstoffgehalts in Gasgemischen bekannt, amperometrische Gassensoren auf Basis von Festkörperelektrolyten zu verwenden. Auf dem als Substrat fungierenden Festkörperelektrolyt sind Elektroden in Form einer Kathode und einer Anode angeordnet, zwischen denen über eine Spannungsquelle eine Gleichspannung anlegbar ist. Das Gasgemisch, dessen Sauerstoffgehalt bestimmt werden soll, umgibt die beiden Elektroden und den Festkörperelektrolyt. Die Elektroden bilden mit dem Festkörperelektrolyt und dem umgebenden Gasgemisch jeweils eine sog. Dreiphasengrenze aus. An der Dreiphasengrenze der Kathode werden die Sauerstoffmoleküle ionisiert und in die Gitterfehlstellen des Festkörperelektrolyten eingebaut. Durch Anlegen einer Spannung wird ein durch die Elektroden und den Festkörperelektrolyt fließender Strom verursacht. Der Ladungstransport erfolgt hierbei über die Gitterfehlstellen des Festkörperelektrolyten. An der Dreiphasengrenze der Anode resultiert schließlich die umgekehrte Reaktion und die rekombinierten Sauerstoffmoleküle werden wieder an das Gasgemisch abgegeben.

Zur Bestimmung der Sauerstoffkonzentration im Gasgemisch wird ein sog. Grenzstromverhalten der Strom-Spannungs-Kennlinie eines derartigen Gassensors benötigt, da im Grenzstrombereich die absolute Größe des resultierenden Stroms einerseits annähernd temperatur- und spannungsunabhängig und andererseits linear abhängig von der Sauerstoffkonzentration im Gasgemisch ist. Mit Hilfe einer geeigneten Messeinrichtung wird der beim Anlegen einer Gleichspannung zwischen den Elektroden fließende Grenzstrom gemessen, der somit ein Maß für den Sauerstoffgehalt des Gasgemisches darstellt. Um ein geeignetes Grenzstromverhalten der Strom-Spannungskennlinie zu gewährleisten, ist es erforderlich, entlang des Strompfads Kathode - Übergang Kathode/Festkörperelektrolyt - Festkörperelektrolyt - Übergang Festkörperelektrolyt/Anode - Anode durch gezieltes Eingreifen eine Begrenzung des Stroms zu verursachen. Die hierzu übliche Maßnahme besteht darin, den Zustrom der Sauerstoffmoleküle zur Kathode mittels einer Diffusionsbarriere zu begrenzen. In diesem Zusammenhang sei z.B. auf die DE 20 2004 015 400 U1 verwiesen. In bestimmten Sensor-Aufbauten erweist sich bedingt durch die verwendete Herstellungstechnologie jedoch als problematisch, eine derartige Diffusionsbarriere in einer hinreichenden Dicke vorzusehen.

ZUSAMMENFASSUNG DER ERFINDUNG

Aufgabe der vorliegenden Erfindung ist es, einen amperometrischen Gassensor zur Bestimmung des Sauerstoffgehalts in Gasgemischen anzugeben, der auf dem Grenzstromprinzip basiert und ohne eine separate Diffusionsbarriere betreibbar ist. Hierbei ist ein möglichst reproduzierbares Grenzstromverhalten des Gassensors im relevanten Temperaturbereich gefordert, in dem der Gassensor betrieben wird.

Diese Aufgabe wird durch einen amperometrischen Gassensor mit den Merkmalen des Anspruchs 1 gelöst.

Vorteilhafte Ausführungsformen des erfindungsgemäßen amperometrischen Gassensors ergeben sich aus den Maßnahmen, die in den von Anspruch 1 abhängigen Ansprüchen aufgeführt sind.

Der erfindungsgemäße amperometrische Gassensor zur Bestimmung des Sauerstoffgehalts in Gasgemischen umfasst einen Festkörperelektrolyt und zwei auf dem Festkörperelektrolyt angeordnete, dem Gasgemisch ausgesetzte Elektroden, zwischen denen über eine Spannungsquelle eine Gleichspannung anlegbar ist, sowie eine Messeinrichtung zur Messung des zwischen den Elektroden fließenden Grenzstroms als Maß für den Sauerstoffgehalt im Gasgemisch. Die als Kathode fungierende Elektrode ist ohne zwischengeschaltete Diffusionsbarriere in Kontakt mit dem Gasgemisch. Durch die Ausbildung der Kathode resultiert eine definierte Begrenzung des Zustroms von Sauerstoffmolekülen aus dem Gasgemisch zur Dreiphasengrenze zwischen dem Festkörperelektrolyten, der Kathode und dem Gasgemisch.

Hierbei weist vorzugsweise die Kathode eine geringe elektrochemische Aktivität bei der Umwandlung von Sauerstoffmolekülen in Sauerstoffionen auf und die als Anode fungierende Elektrode eine hohe elektrochemische Aktivität bei der Umwandlung von Sauerstoffionen in Sauerstoffmoleküle.

Mit Vorteil unterscheiden sich die elektrochemischen Aktivitäten der Anode und der Kathode mindestens um den Faktor 10.

In einer vorteilhaften Ausführungsform sind die als Kathode und als Anode fungierenden Elektroden jeweils als Metall-Keramik-Elektrode ausgebildet, wobei die Kathode einen Metallgehalt kleiner gleich 50 Gewichtsprozent und die Anode einen Metallgehalt größer gleich 80 Gewichtsprozent aufweist.

Dabei kann vorgesehen werden, dass die Kathode einen Metallgehalt im Bereich zwischen 30 Gewichtsprozent und 40 Gewichtsprozent aufweist.

Vorzugsweise gilt für das Verhältnis der Flächen der Elektroden

$$F_K / F_A < 0.7,$$

mit:

$F_A$ := Fläche der als Anode fungierenden Elektrode
$F_K$ := Fläche der als Kathode fungierenden Elektrode

Mit Vorteil ist der Festkörperelektrolyt als plättchenförmiges Substrat ausgebildet und die als Kathode und Anode fungierenden Elektroden sind in einem Teilbereich auf einer ersten Substratseite angeordnet.

Es ist hierbei möglich, dass in einem Teilbereich auf der gegenüberliegenden zweiten Substratseite ein Heizelement angeordnet ist.

Als vorteilhaft erweist sich, wenn das Heizelement als planarer, stromdurchflossener Widerstandsheizer ausgebildet ist, der bei 20°C einen elektrischen Widerstand kleiner als $3.5\Omega$ aufweist.

In einer möglichen Ausführungsform sind die Kathode und die Anode als auf der ersten Substratseite angeordnete Interdigitalelektroden ausgebildet.

Es kann vorgesehen sein, dass als Metall-Material in den Elektroden Platin dient.

Desweiteren kann vorgesehen sein, dass als Material für den Festkörperelektrolyt eines der folgenden Materialien dient: Yttriumoxid-stabilisiertes Zirkoniumoxid, Scandium-stabilisiertes Zirkoniumoxid, Magnesiumstabilisiertes Zirkoniumoxid.

Insbesondere ist es möglich, dass der Festkörperelektrolyt aus Yttriumoxid-stabilisiertem Zirkoniumoxid besteht und einen Yttriumoxid-Gehalt im Bereich zwischen 4 Molprozent und 10 Molprozent aufweist.

Schließlich ist es möglich, dass eine grobporöse Schutzschicht flächig über der Kathode und der Anode angeordnet ist, die keine Diffusionslimitierung an der Kathode verursacht.

Als vorteilhaft am erfindungsgemäßen amperometrischen Gassensor erweist sich, dass die Kathode nicht mit einer Diffusionsbarriere versehen werden muss. Zur Fertigung des Gassensors stehen Herstellungsverfahren zur Verfügung, die im Fall einer ansonsten benötigten Diffusionsbarriere ungeeignet wären.

Desweiteren ist sichergestellt, dass der zur Messung mittels einer geeigneten Messeinrichtung bestimmte Grenzstrom eindeutig der Kathode zugeordnet werden kann und außerdem kinetisch limitiert ist. Aus diesem Grund resultiert ein stabiles bzw. reproduzierbares Grenzstromverhalten des erfindungsgemäßen amperometrischen Gassensors auch bei höheren Temperaturen bzw. im relevanten Temperaturbereich, in dem dieser betrieben wird.

Weitere Einzelheiten und Vorteile der vorliegenden Erfindung seien anhand der nachfolgenden Beschreibung eines Ausführungsbeispiels des erfindungsgemäßen amperometrischen Gassensors in Verbindung mit den Figuren erläutert.

## KURZE BESCHREIBUNG DER ZEICHNUNGEN

Es zeigt hierbei

Figur 1     eine Prinzipdarstellung des erfindungsgemäßen amperometrischen Gassensors;

Figur 2     eine Explosionsdarstellung eines Ausführungsbeispiels des erfindungsgemäßen amperometrischen Gassensors;

Figur 3     eine Draufsicht auf das Ausführungsbeispiel des erfindungsgemäßen amperometrischen Gassensors;

Figur 4a, 4b     je eine Schnittansicht des Ausführungsbeispiels des erfindungsgemäßen amperometrischen Gassensors.

## BESCHREIBUNG DER AUSFÜHRUNGSFORMEN

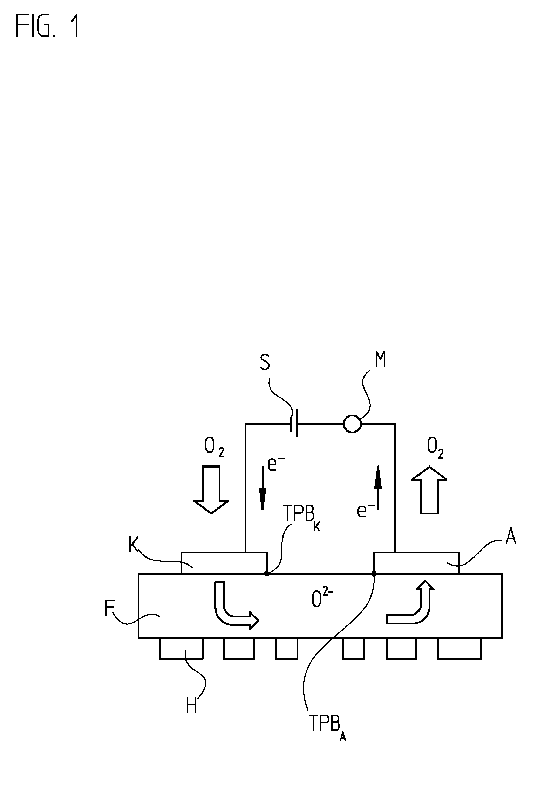

Eine schematisierte Prinzipdarstellung des erfindungsgemäßen amperometrischen Gassensors ist in Figur 1 gezeigt.

Auf dem als Substrat fungierenden Festkörperelektrolyt F sind auf einer Substratseite Elektroden, d.h. eine Kathode K und eine Anode A angeordnet, zwischen denen über eine Spannungsquelle S eine Gleichspannung anlegbar ist. Das Gasgemisch, dessen Sauerstoffgehalt bestimmt werden soll, umgibt die beiden Elektroden und den Festkörperelektrolyt F. Die Elektroden bilden mit dem Festkörperelektrolyt F und dem umgebenden Gasgemisch jeweils eine sog. Dreiphasengrenze $TPB_K$ bzw. $TPB_A$ aus, die in der Figur jeweils schematisiert angedeutet ist. An der Dreiphasengrenze der Kathode $TPB_K$ werden die Sauerstoffmoleküle $O_2$ ionisiert und in die Gitterfehlstellen des Festkörperelektrolyten F eingebaut. Durch Anlegen einer Spannung mittels der Spannungsquelle S wird ein durch die Elektroden und den Festkörperelektrolyt F fließender Strom verursacht. Der Ladungstransport erfolgt über die Gitterfehlstellen des Festkörperelektrolyten $TPB_K$. An der Dreiphasengrenze $TPB_A$ der Anode A resultiert schließlich die umgekehrte Reaktion und die rekombinierten Sauerstoffmoleküle $O_2$ werden wieder an das Gasgemisch abgegeben. Mit Hilfe der schematisiert angedeuteten Messeinrichtung M wird der beim Anlegen der Gleichspannung zwischen Kathode K und Anode A fließende Grenzstrom gemessen, der ein Maß für den Sauerstoffgehalt des Gasgemisches darstellt. Auf der den Elektroden gegenüberliegenden Substratseite ist ferner ein Heizelement H angeordnet, über das eine Aufheizung des Festkörperelektrolyten F erfolgt, da eine ausreichende Ionenleitfähigkeit erst ab höheren Temperaturen einsetzt.

Im erfindungsgemäßen amperometrischen Gassensor stehen die Kathode K und die Anode A nunmehr unmittelbar in Kontakt mit dem den Gassensor umgebenden Gasgemisch. Insbesondere ist hierbei die Kathode K im Unterschied zu bekannten amperometrischen Gassensoren basierend auf dem Grenzstromprinzip nicht von einer darüber angeordneten Diffusionsbarriere bedeckt, sondern ist ohne eine zwischengeschaltete Diffusionsbarriere in direktem Kontakt mit dem Gasgemisch. Um die beim vorliegend verwendeten amperometrischen Messprinzip erforderliche Begrenzung des Zustroms von Sauerstoffmolekülen $O_2$ zur Dreiphasengrenze $TPB_K$ zwischen dem Festkörperelektrolyt F, der Kathode K und dem den Gassensor umgebenden Gasgemisch zu gewährleisten, ist erfindungsgemäß insbesondere eine bestimmte Ausbildung der Kathode K maßgeblich. Aufgrund der nicht mehr vorgesehenen Diffusionsbarriere oberhalb der Kathode K ist erfindungsgemäß eine andere Begrenzung des Zustroms von Sauerstoffmolekülen $O_2$ aus dem Gasgemisch zur Dreiphasengrenze $TPB_K$ der Kathode K zwischen dem Festkörperelektrolyt F, der Kathode K und dem Gasgemisch vorgesehen. Die erforderliche Strombegrenzung erfolgt erfindungsgemäß nunmehr durch die geeignete Ausbildung der Kathode K selbst. So ist vorgesehen, dass die Länge der Dreiphasengrenze $TPB_K$ auf Seiten der Kathode K reduziert wird und damit die Kathode K lediglich eine geringe elektrochemische Aktivität bei der Umwandlung von Sauerstoffmolekülen $O_2$ in Sauerstoffionen $O^{2-}$ besitzt. Die elektrochemische Aktivität der Kathode K diesbezüglich wird deshalb deutlich geringer eingestellt als die elektrochemische Aktivität der Anode A bei der Rückumwandlung von Sauerstoffionen $O^{2-}$ in Sauerstoffmoleküle $O_2$. Besonders vorteilhaft erweist sich, wenn sich die elektrochemischen Aktivitäten der Kathode K und der Anode A mindestens um den Faktor 10 unterscheiden. Die Aktivität der Elektroden lässt sich hierbei etwa über die Messeinrichtung M als gemessener Strom zwischen Kathode K und Anode A bei einer vorgegebenen positiven bzw. negativen Spannung quantitativ erfassen. So resultiert etwa in einem Ausführungsbeispiel des erfindungsgemäßen amperometrischen Gassensors bei einer Spannung $U_{Kathode/Anode}$ = 1V ein Strom $I_G$ = 30$\mu$A an der Kathode K und bei einer Spannung $U_{Anode/Kathode}$ = - 1V ein Strom I = 500$\mu$A an der Anode A; d.h. hier unterscheiden sich die elektrochemischen Aktivitäten der Kathode K und der Anode A um einen Faktor 16.6

Aufgrund der nunmehr vorgesehenen Kombination einer Anode A mit hoher elektrochemischer Aktivität und einer Kathode K mit geringer elektrochemischer Aktivität wird die in der Kathode K erfolgende Diffusion der Sauerstoffmoleküle $O_2$ zur Dreiphasengrenze $TPB_K$ zur maßgeblichen strombegrenzenden Komponente des erfindungsgemäßen amperometrischen Gassensors. Wegen der hohen Aktivität der Anode A können hinreichend viele Sauerstoffionen $O^{2-}$ das Substrat bzw. den Festkörperelektrolyt F verlassen, d.h. durch andere Komponenten entlang des Strompfads kommt es zu keinen ggf. messverfälschenden, weiteren strombegrenzenden Effekten.

Die strombegrenzende, kinetisch limitierende Wirkung der Kathode K lässt sich durch die Wahl geeigneter Materialien und Materialzusammensetzungen für die Elektroden gewährleisten. So werden sowohl die Kathode K als auch die Anode A als Metall-Keramik-Elektroden bzw. CERMET-Elektroden ausgebildet. Als Metall-Material fungiert hier etwa bevorzugterweise Platin, als Keramik-Material wird Yttriumoxid-stabilisiertes Zirkoniumoxid eingesetzt. Aufgrund der geforderten unterschiedlichen elektrochemischen Aktivitäten der Kathode K und der Anode A ist auf Seiten der Kathode K vorgesehen, dass diese einen Metallgehalt kleiner gleich 50 Gewichtsprozent besitzt, vorzugsweise einen Metallgehalt zwischen 30 Gewichtsprozent und 40 Gewichtsprozent. Die Anode A mit der erforderlichen hohen elektrochemischen Aktivität hingegen wird als Metall-Keramik-Elektrode ausgebildet, die einen Metallgehalt größer gleich 80 Gewichtsprozent aufweist. Als vorteilhaft erweist sich im Hinblick auf die Elektroden ferner, wenn das Keramik-Material und das Metall-Material möglichst homogen durchmischt sind.

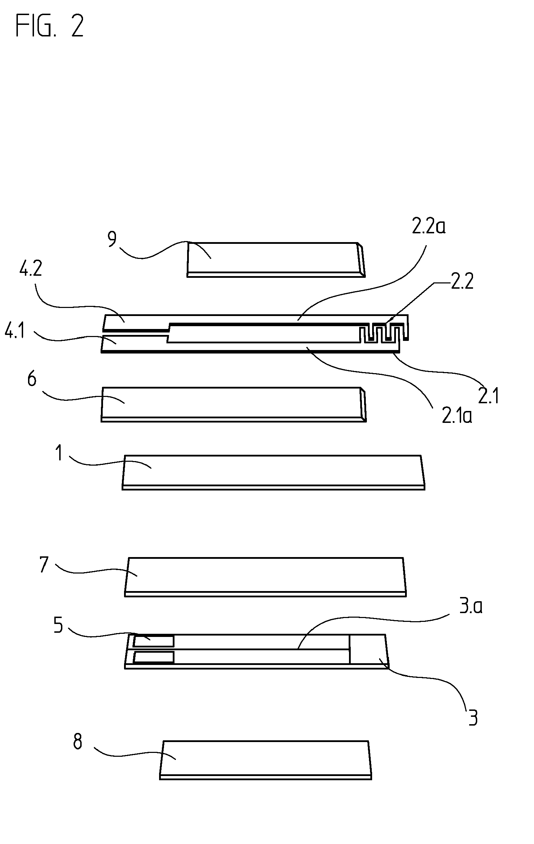

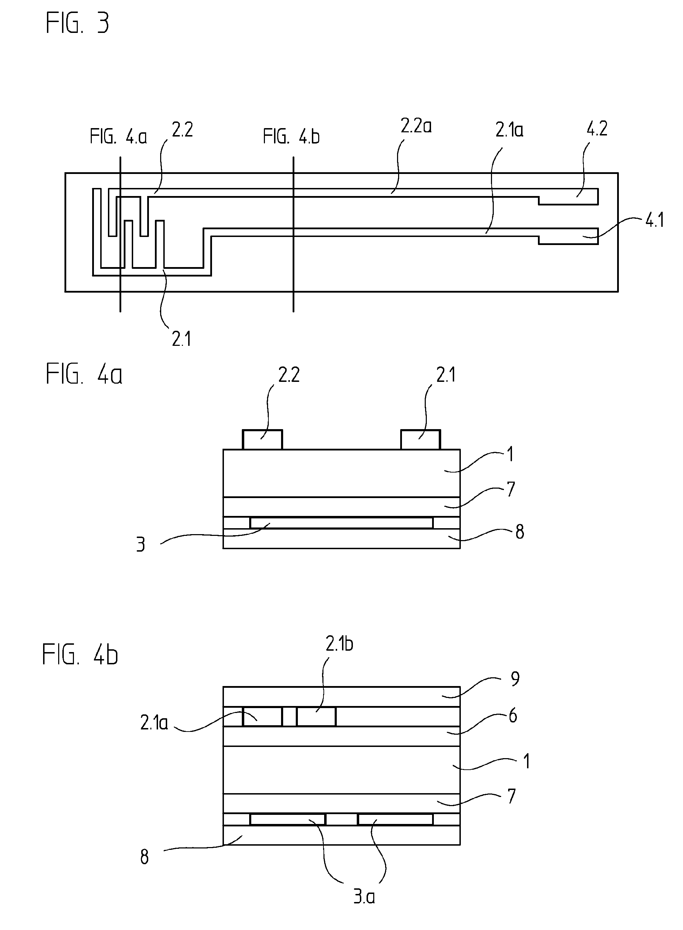

Weitere Maßnahmen zur Optimierung des erfindungsgemäßen amperometrischen Gassensors werden nachfolgend anhand eines konkreten Ausführungsbeispiels in Verbindung mit der Beschreibung der Figuren 2, 3 4a und 4b erläutert. Hierbei zeigt Figur 2 eine Explosionsdarstellung des Gassensors, die Figur 3 eine Draufsicht sowie 4a, 4b Schnittansichten entlang der in Figur 3 eingezeichneten Schnittebenen.

Der erfindungsgemäße amperometrische Gassensor umfasst einen Festkörperelektrolyt 1, auf dem zwei Elektroden in Form einer Anode 2.1 und einer Kathode 2.2 angeordnet sind. Der Festkörperelektrolyt 1 ist als plättchenförmiges Substrat mit rechteckförmigem Querschnitt ausgebildet. Als Festkörperelektolyt 1 wird ein Material gewählt, das eine ausreichend hohe Leitfähigkeit für die an der Dreiphasengrenze der Kathode 2.1 gebildeten Sauerstoffionen aufweist. In einer bevorzugten Variante ist Yttriumoxid-stabilisiertes Zirkoniumoxid vorgesehen, das einen Yttriumoxid-Gehalt zwischen 4 Molprozent und 10 Molprozent besitzt.

Im dargestellten Ausführungsbeispiel des amperometrischen Gassensors sind die Anode 2.1 und die Kathode 2.2 lediglich in einem Teilbereich auf einer ersten Substratseite (Oberseite) angeordnet. In Figur 2 handelt es sich um einen randseitig rechts angeordneten Teilbereich, in der Darstellung von Figur 3 ist dieser Teilbereich randseitig links vorgesehen. Die Anode 2.1 und die Kathode 2.2 sind in diesem Teilbereich als ineinander verzahnt angeordnete Interdigitalelektroden ausgebildet. Über Zuleitungen 2.1 a, 2.1 b sind die Anode 2.1 und die Kathode 2.2 mit Kontaktierungsbereichen 4.1, 4.2 am entgegengesetzten Längsende des Substrats verbunden und können hierüber elektrisch kontaktiert werden. Wie aus der Schnittansicht in Figur 4b ersichtlich, sind die Zuleitungen 2.1 a, 2.2a als auch die Kontaktierungsbereiche 4.1, 4.2 nicht unmittelbar auf dem Festkörperelektolyt 1 angeordnet, sondern auf einer Isolationsschicht 6, die zwischen dem Festkörperelektrolyt 1 und den Zuleitungen 2.1a, 2.2a bzw. Kontaktierungsbereichen 4.1, 4.2 vorgesehen ist. Für die Isolationsschicht 6 erweist sich als vorteilhaft, wenn hier ein Material vorgesehen wird, das weder elektrisch leitfähig ist noch eine ionische Leitfähigkeit aufweist. Ferner sollte das Material der Isolationsschicht 6 eine gute Haftung zu den benachbarten Materialien besitzen und in Bezug auf seinen thermischen Ausdehnungskoeffizienten möglichst angepasst an das Material des Festkörperelektrolyten 1 gewählt werden.

Oberhalb der Zuleitungen 2.1 a, 2.1 bist außerhalb des Teilbereichs mit der Anode 2.1 und der Kathode 2.2 ferner eine Schutzschicht 9 auf der ersten Substratseite angeordnet. Die Schutzschicht 9 bedeckt wie z.B. aus Figur 2 ersichtlich zudem nicht den randseitigen Substratbereich mit den Kontaktierungsbereichen 4.1, 4.2. In Bezug auf ein geeignetes Material der Schutzschicht 9 gelten i.w. die gleichen Anforderungen wie im Fall des Materials für die Isolationsschicht 6.

Wie insbesondere aus den Schnittansichten in den Figuren 4a und 4b ersichtlich ist, stehen die Elektroden, d.h. die Anode 2.1 und die Kathode 2.2 unmittelbar in Kontakt mit dem den Gassensor umgebenden Gasgemisch, dessen Sauerstoffgehalt mit dem erfindungsgemäßen Gassensor zu bestimmen ist. Insbesondere ist hierbei die Kathode 2.2 im Unterschied wie bereits oben erwähnt nicht von einer darüber angeordneten Diffusionsbarriere bedeckt, sondern ist ohne eine zwischengeschaltete Diffusionsbarriere in direktem Kontakt mit dem Gasgemisch. Um die beim vorliegend verwendeten amperometrischen Messprinzip erforderliche Begrenzung des Zustroms von Sauerstoffmolekülen zur Dreiphasengrenze zwischen dem Festkörperelektrolyt 1, der Kathode 2.2 und dem den Gassensor umgebenden Gasgemisch zu gewährleisten, ist eine Ausbildung der Kathode 2.2 wie oben diskutiert vorgesehen.

Auf einer zweiten Substratseite (Unterseite) ist in einem Teilbereich der dem Teilbereich auf der ersten Substratseite mit den Elektroden, d.h. der Anode 2.1 und die Kathode 2.2, gegenüberliegt, ein Heizelement 3 angeordnet. Über das Heizelement 3 ist der Festkörperelektolyt 1 in demjenigen Teilbereich, in dem die Elektroden angeordnet sind, auf die erforderliche Betriebstemperatur im Bereich zwischen 700°C - 800°C aufheizbar. Das Heizelement 3 ist als stromdurchflossener Widerstandsleiter mit planaren Metallbahnen ausgebildet. Besonders vorteilhaft erweist sich hierbei für den erfindungsgemäßen Gassensor, wenn das Heizelement 3 derart ausgelegt wird, dass dieses bei 20°C einen elektrischen Widerstand kleiner als 3.5Ω aufweist. Auf diese Art und Weise kann ein eventuelles Übersprechen der Heizelement-Spannung auf die Elektroden auf der anderen Substratseite weitgehend vermieden werden. Ein derartiges Übersprechen würde eine instabile Strom-Spannungskennlinie und damit Messfehler bei der Bestimmung des Sauerstoffgehalts im Gasgemisch zur Folge haben.

Als Material für die Metallbahnen des Heizelements 3 eignen sich etwa Platin, z.B. aufgebracht als Platin-Siebdruckpaste oder aber Molybdän bzw. Wolfram. Generell erweist sich auch hier als günstig, wenn das verwendete Material des Heizelements 3 angepasst an die thermischen Eigenschaften des Festkörperelektrolyten 1 gewählt wird. Über Zuleitungen 3.a ist das an einer Längsseite des Festkörperelektrolyten 1 angeordnete Heizelement 3 mit Kontaktierungsbereichen 5 an der entgegengesetzten Substrat-Längsseite verbunden; über die Kontaktierungsbereiche 5 kann das Heizelement 3 mit einer - nicht gezeigten Stromquelle - verbunden werden.

Im dargestellten Ausführungsbeispiel sind die Metallbahnen des Heizelements 3 nicht unmittelbar auf dem Substrat bzw. dem Festkörperelektrolyt 1 angeordnet sondern auf einer weiteren Isolationsschicht 7, die hier ganzflächig auf der zweiten Substratseite angeordnet ist. In Bezug auf das Material dieser Isolationsschicht 7 gelten die gleichen Anforderungen wie im Fall der bereits oben erwähnten Isolationsschicht 6. Mit Ausnahme der Kontaktierungsbereiche 5 ist auf der zweiten Substratseite oberhalb der Metallbahnen des Widerstandsheizers eine Schutzschicht 8 angeordnet; auch für diese Schutzschicht 8 gelten die bereits oben diskutierten Anforderungen.

Wie bereits oben erläutert, ist aufgrund der nicht mehr vorgesehenen Diffusionsbarriere oberhalb der Kathode 2.2 erfindungsgemäß eine andere Begrenzung des Zustroms von Sauerstoffmolekülen aus dem Gasgemisch zur Dreiphasengrenze zwischen dem Festkörperelektrolyt 1, der Kathode 2.2 und dem Gasgemisch vorgesehen. Die erforderliche Strombegrenzung erfolgt wie oben diskutiert durch die geeignete Ausbildung der Kathode 2.2 selbst.

Als weitere Maßnahme zur gezielten Einstellung eines unterschiedlichen elektrochemischen Aktivitäts-Verhältnisses zwischen der Kathode 2.2 und der Anode 2.1 kann beim erfindungsgemäßen amperometrischen Gassensor vorgesehen werden, die Fläche der Elektroden geeignet zu dimensionieren. Nach dem definiertem Einstellen einer bestimmten Elektroden-Aktivität über das jeweilige Metall-Keramik-Verhältnis, lässt sich bei konstanter Austauschstromdichte durch die Änderung der Elektrodenfläche der Elektrodenstrom je nach Bedarf erhöhen oder erniedrigen. Es erweist sich dabei als besonders vorteilhaft, wenn für das Verhältnis der Fläche $F_K$ der Kathode 2.2 zur Fläche $F_A$ der Anode 2.1 auf dem Festkörperelektolyt 1

$$F_K / F_A < 0.7$$

gilt, d.h. das Verhältnis der Fläche $F_K$ der Kathode 2.2 zur Fläche $F_A$ der Anode 2.1 auf dem Festkörperelektolyt 1 ist bevorzugt kleiner als 0.7 zu wählen, wobei:

$F_A$ := Fläche der als Anode fungierenden Elektrode
$F_K$ := Fläche der als Kathode fungierenden Elektrode

Neben dem erläuterten Ausführungsbeispiel existieren im Rahmen der vorliegenden Erfindung selbstverständlich noch weitere Ausgestaltungsmöglichkeiten.

So wäre es etwa möglich, als Material für den Festkörperelektrolyt alternativ zum oben erwähnten Yttriumoxid-stabilisierten Zirkoniumoxid Magnesium-stabilisiertes Zirkoniumoxid oder aber Scandium-stabilisiertes Zirkoniumoxid zu verwenden.

Anstelle der im Ausführungsbeispiel vorgesehenen Interdigitalstruktur der Elektroden könnte auch eine andere Geometrie der Kathode und der Anode verwendet werden. Beispielsweise wären radialsymmetrisch ausgebildete oder aber U-förmige Elektroden-Geometrien denkbar.

Um die Elektroden im erfindungsgemäßen Gassensor vor dem Aufschlag von Wassertropfen zu schützen, kann desweiteren vorgesehen werden eine grobporöse Schutzschicht flächig über der Kathode und der Anode anzuordnen. Es sei dabei darauf hingewiesen, dass eine derartige grobporöse Schutzschicht keine Diffusionslimitierung an der Kathode verursacht, d.h. diese steht erfindungsgemäß auch in einer solchen Ausführung ohne zwischengeschaltete Diffusionsbarriere in Kontakt mit dem Gasgemisch.

Anstelle der gemeinsamen Anordnung der beiden Elektroden auf einer Seite des Festkörperelektrolyten ist es möglich, die Kathode und die Anode auf gegenüberliegenden Seiten des Substrats anzuordnen. In diesem Fall wird kein separates Heizelement im Gassensor vorgesehen, sondern der Gassensor wird in einer Umgebung verwendet, die eine hinreichend hohe, konstante Temperatur T > 700°C aufweist.

Schließlich kann vorgesehen werden, anstelle des Aufbaus des erfindungsgemäßen Gassensors auf einem vorgebrannten Substrat diesen mittels sog. Green-Tapes in einer sog. Sandwich-Struktur auszubilden usw..

**Patentansprüche**

1.  Amperometrischer Gassensor zur Bestimmung des Sauerstoffgehalts in Gasgemischen mit einem Festkörperelektrolyt (F; 1) und zwei auf dem Festkörperelektrolyt (F; 1) angeordneten, dem Gasgemisch ausgesetzten Elektroden, zwischen denen über eine Spannungsquelle (S) eine Gleichspannung anlegbar ist, sowie einer Messeinrichtung (M) zur Messung des zwischen den Elektroden fließenden Grenzstroms als Maß für den Sauerstoffgehalt im Gasgemisch, wobei die als Kathode (K; 2.2) fungierende Elektrode ohne zwischengeschaltete Diffusionsbarriere in Kontakt mit dem Gasgemisch ist und durch die Ausbildung der Kathode (K; 2.2) eine definierte Begrenzung des Zustroms von Sauerstoffmolekülen ($O_2$) aus dem Gasgemisch zur Dreiphasengrenze ($TPB_K$) zwischen dem Festkörperelektrolyten (F; 1), der Kathode (K; 2.2) und dem Gasgemisch resultiert.

2.  Amperometrischer Gassensor nach Anspruch 1, wobei die Kathode (K; 2.2) eine geringe elektrochemische Aktivität bei der Umwandlung von Sauerstoffmolekülen ($O_2$) in Sauerstoffionen ($O^{2-}$) aufweist und die als Anode (A; 2.1) fungierende Elektrode eine hohe elektrochemische Aktivität bei der Umwandlung von Sauerstoffionen ($O^{2-}$) in Sauerstoffmoleküle ($O_2$) aufweist.

3.  Amperometrischer Gassensor nach Anspruch 2, wobei sich die elektrochemischen Aktivitäten der Anode (A; 2.1) und der Kathode (K; 2.2) mindestens um den Faktor 10 unterscheiden.

4.  Amperometrischer Gassensor nach mindestens einem der vorhergehenden Ansprüche, wobei die Kathode (K; 2.2) und die Anode (A; 2.1) fungierenden Elektroden jeweils als Metall-Keramik-Elektrode ausgebildet sind und die Kathode (K; 2.2) einen Metallgehalt kleiner gleich 50 Gewichtsprozent und die Anode (A; 2.1) einen Metallgehalt größer gleich 80 Gewichtsprozent aufweist.

5.  Amperometrischer Gassensor nach Anspruch 4, wobei die Kathode (K; 2.2) einen Metallgehalt im Bereich zwischen 30 Gewichtsprozent und 40 Gewichtsprozent aufweist.

6.  Amperometrischer Gassensor nach mindestens einem der vorhergehenden Ansprüche, wobei für das Verhältnis der Flächen der Elektroden

$$F_K / F_A < 0.7$$

gilt, mit:

$F_A$ := Fläche der als Anode (A, 2.1) fungierenden Elektrode
$F_K$ := Fläche der als Kathode (K,; 2.2) fungierenden Elektrode

7.  Amperometrischer Gassensor nach mindestens einem der vorhergehenden Ansprüche, wobei der Festkörperelektrolyt (F; 1) als plättchenförmiges Substrat ausgebildet ist und die als Kathode (K; 2.2) und Anode (A; 2.1) fungierenden Elektroden in einem Teilbereich auf einer ersten Substratseite angeordnet sind.

8.  Amperometrischer Gassensor nach Anspruch 7, wobei in einem Teilbereich auf der gegenüberliegenden zweiten Substratseite ein Heizelement (3) angeordnet ist.

9. Amperometrischer Gassensor nach Anspruch 8, wobei das Heizelement (3) als planarer, stromdurchflossener Widerstandsheizer ausgebildet ist, der bei 20°C einen elektrischen Widerstand kleiner als 3.5Ω aufweist.

10. Amperometrischer Gassensor nach Anspruch 7, wobei die Kathode (K; 2.2) und die Anode (A; 2.1) als auf der ersten Substratseite angeordnete Interdigitalelektroden ausgebildet sind.

11. Amperometrischer Gassensor nach mindestens einem der vorhergehenden Ansprüche, wobei als Metall-Material in den Elektroden Platin dient.

12. Amperometrischer Gassensor nach mindestens einem der vorhergehenden Ansprüche, wobei als Material für den Festkörperelektrolyt (F; 1) eines der folgenden Materialien dient: Yttriumoxid-stabilisiertes Zirkoniumoxid, Scandium-stabilisiertes Zirkoniumoxid, Magnesium-stabilisiertes Zirkoniumoxid.

13. Amperometrischer Gassensor nach Anspruch 12, wobei der Festkörperelektrolyt (F; 1) aus Yttriumoxid-stabilisiertem Zirkoniumoxid besteht und einen Yttriumoxid-Gehalt im Bereich zwischen 4 Molprozent und 10 Molprozent aufweist.

14. Amperometrischer Gassensor nach mindestens einem der vorhergehenden Ansprüche, wobei eine grobporöse Schutzschicht flächig über der Kathode (K; 2.2) und der Anode (A; 2.1) angeordnet ist, die keine Diffusionslimitierung an der Kathode (K; 2.2) verursacht.

FIG. 1

FIG. 2

FIG. 3

FIG. 4.a  2.2    FIG. 4.b    2.2a    2.1a    4.2

2.1

4.1

2.1

FIG. 4a

2.2    2.1

1

7

3    8

FIG. 4b

2.1b

9

2.1a    6

1

7

8

3.a

**Europäisches Patentamt**
**European Patent Office**
**Office européen des brevets**

# EUROPÄISCHER RECHERCHENBERICHT

**Nummer der Anmeldung**

EP 13 16 6237

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 45 033 A1 (HERAEUS ELECTRO NITE INT [BE]) 27. Juni 1996 (1996-06-27) * das ganze Dokument * ----- | 1-14 | INV. G01N27/407 |
| X | US 2003/034246 A1 (LIU MEILIN [US] ET AL) 20. Februar 2003 (2003-02-20) * Absatz [0039] - Absatz [0041]; Beispiele 2, 6, 14 * ----- | 1 | |
| X | DE 23 04 464 A1 (BOSCH GMBH ROBERT) 8. August 1974 (1974-08-08) * Seite 5, Zeile 19 - Seite 6, Zeile 34; Abbildungen 1,2 * ----- | 1 | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| München | 27. September 2013 | Purdie, Douglas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## EP 2 799 858 A1

**ANHANG ZUM EUROPÄISCHEN RECHERCHENBERICHT**
**ÜBER DIE EUROPÄISCHE PATENTANMELDUNG NR.**           EP 13 16 6237

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2013

| Im Recherchenbericht angeführtes Patentdokument | Datum der Veröffentlichung | Mitglied(er) der Patentfamilie | Datum der Veröffentlichung |
|---|---|---|---|
| DE 4445033        A1 | 27-06-1996 | BR      9510040 A<br>CN      1170459 A<br>DE      4445033 A1<br>EP      0797770 A1<br>JP    H10510622 A<br>RU      2143679 C1<br>US      5820745 A<br>WO      9618890 A1 | 02-06-1998<br>14-01-1998<br>27-06-1996<br>01-10-1997<br>13-10-1998<br>27-12-1999<br>13-10-1998<br>20-06-1996 |
| US 2003034246   A1 | 20-02-2003 | KEINE | |
| DE 2304464       A1 | 08-08-1974 | KEINE | |

EPO FORM P0461

Für nähere Einzelheiten zu diesem Anhang : siehe Amtsblatt des Europäischen Patentamts, Nr.12/82

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202004015400 U1